# EUROPEAN PATENT APPLICATION

(11) **EP 4 230 480 A2**
(43) Date of publication of application: **23.08.2023**
(21) Application number: 23169265.8
(22) Date of filing: 07.05.2014
(51) Int. Cl.: B60R 11/04, H04N 23/51

(54) **IMAGING SYSTEM FOR A MOTOR VEHICLE AND METHOD OF MOUNTING AN IMAGING SYSTEM**

(62) Divisional of application: 14167380.6
(71) Applicant: Arriver Software AB, 583 30 Linköping (SE)
(72) Inventor: Knutsson, Per, Linkoping (SE); Fredriksson, Peter, Linkoping (SE); Tenselius, Daniel, Ljungsbro (SE); Malmborg, Bo, Askersund (SE); Holmberg, Per, Linkoping (SE); Eidet, Per-Anders, Linkoping (SE); Wigren, Roger, Ljungsbro (SE); Gunes, Melih, Wixom (US)
(74) Representative: Loveless, Ian Mark

(57) **Abstract**

An imaging system (11) for a motor vehicle comprises a camera housing part (96) and at least one camera module (12) to be mounted to said camera housing part (96). The camera module (12) comprises first rotation locking means (94), said camera housing part (96) comprises second rotation locking means (99) adapted to cooperate with said first rotation locking means (94), wherein said first and second rotation locking means (94) cooperate to lock the camera module (12) against rotation relative to the camera housing part (96).

## Description

The invention relates to an imaging system for a motor vehicle, comprising a camera housing part and at least one camera module to be mounted to said camera housing part. The invention also relates to a method of mounting a camera module to a camera housing part.

In the assembly process of an imaging system for a motor vehicle, the lens objective is usually aligned relative to the image sensor in order to compensate for manufacturing tolerances of the lens objective and tilt or misalignment of the image sensor, which would otherwise lead to a deterioration of the image quality. Once the optimal position and orientation of the lens objective has been determined, it is conventionally fixed relative to the image sensor by a glue joint between the lens objective and the front of the lens holder. However, since the lens objective is usually rotationally symmetrical around the optical axis, a roll angle displacement of the image sensor cannot be corrected by rotating the lens objective relative to the image sensor in the alignment process. Therefore, in particular for stereo systems but also for mono systems, a laborious roll alignment has to be performed during mounting of the camera modules into an external camera housing part by rotating one camera module around its optical axis.

Generally, in order to handle both mono and stereo camera systems, it is desired to share common production processes as much as possible in order to gain efficiency and throughput, hence a modular approach for the camera eyes. It is also critical to maintain focus over the temperature envelope for any automotive camera.

The problem underlying the present invention is to provide an imaging system with a camera module which is suited to be used both in mono and stereo systems without modification, and where a laborious roll alignment during mounting of the camera modules into the camera housing part can be avoided.

The invention solves this object with the features of the independent claims. According to the invention, cooperating first and second rotation locking means are provided at the camera unit and the camera housing part, which cooperate to lock the camera module against rotation relative to the camera housing part. Due to the inventive rotation locking means, the camera module is roll aligned relative to the camera housing part by simply bringing the rotation locking means into cooperation, without any further measures to be taken. According to the invention, therefore, a simple passive alignment of the camera module relative to the camera housing part is provided.

Preferably the first and second rotation locking means are designed to be fittingly inserted into each other along a linear insertion direction. In a simple embodiment, the rotation locking means comprises bores and pins to be fittingly inserted into the bores. In this case, the pins are preferably hollow to allow engagement of screws for fixing said camera module to said camera housing part. Here, the bores may preferably be through holes in a mounting wall to allow the fixing screws to extend through the bores. Furthermore, the mounting wall advantageously comprises an opening through which light can pass on its way into the camera module. Furthermore, the first rotation locking means is advantageously arranged at the lens holder.

In a preferred embodiment, the camera housing part comprises at least one contact surface designed to be in planar contact with a surface of the camera module when the camera module is fully inserted in said camera housing part. The planar contact between the surfaces guarantees that the alignment, in particular the tip and tilt angle alignment of the camera module relative to the camera housing part is precisely maintained in the mounted state.

Preferably the alignment of the lens holder relative to a back plate of the camera module is fixed by a glue joint between the lens holder and the back plate. A roll angle displacement of the image sensor is corrected by rotating the lens holder relative to the back plate holding the image sensor. In other words, the roll alignment can be performed already in the mounting of the camera module, such that the mounted camera module can be fully roll-aligned in itself, and no further roll alignment is required during the mounting of the camera modules into the camera housing part. One and the same type of camera module is suited to be used without modifications in mono as well as in stereo applications.

In the following the invention shall be illustrated on the basis of preferred embodiments with reference to the accompanying drawings, wherein:
- Fig. 1: shows a scheme illustrating a vision system;
- Fig. 2: shows a cross-sectional view of a camera module;
- Fig. 3: shows a perspective view of a camera module;
- Fig. 4: shows a top view onto a camera module;
- Fig. 5: shows a perspective view of a camera housing part for a stereo imaging means;
- Fig. 6: shows a rear view of the camera housing part of Figure 5;
- Fig. 7: shows a perspective view of a camera housing part for a mono imaging means; and
- Fig. 8: shows a rear view of the camera housing part of Figure 7.

The vision system 10 is mounted in a motor vehicle and comprises an imaging means 11 for acquiring images of a region surrounding the motor vehicle, for example a region in front of the motor vehicle. The imaging means 11 comprises a camera housing part 96 and one or more optical imaging devices 12, in particular camera modules, mounted in the camera housing part 96. The camera housing part 96 comprises one or more receptacles 98 each adapted to receive a camera module 12. The camera housing part 96 is preferably made of metal, for example of Aluminium, and may be mounted behind a front windshield of a motor vehicle in the region of the rear mirror.

In one embodiment the imaging means 11 operates in the visible wavelength range. However, infrared cameras may also be possible, where infrared covers near IR with wavelengths below 5 microns and/or far IR with wavelengths beyond 5 microns. In some embodiments the imaging means 11 comprises a plurality of imaging devices 12 in particular forming a stereo imaging means 11. In other embodiments only one imaging device 12 forming a mono imaging means 11 can be used. Each camera module 12 has one optical path, therefore it can also be called a camera eye.

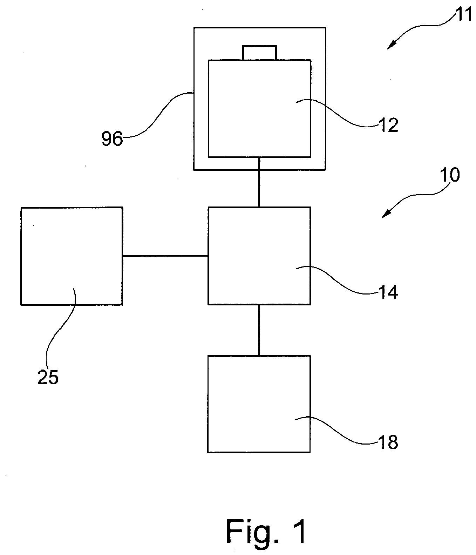

The imaging means 11 may be coupled to an image pre-processor, not shown in Figure 1, adapted to control the capture of images by the imaging means 11, receive the electrical signal containing the image information from the imaging means 11, warp pairs of left/ right images into alignment and/or create disparity images, which per se is known in the art. The image pre-processor may be realized by a dedicated hardware circuit, in particular a Field Programmable Gate Array (FPGA). Alternatively the pre-processor, or part of its functions, can be realized in the electronic processing means 14. In case of a mono imaging means 11 using only one camera 12 a pre-processor is not needed.

The image data are provided to an electronic processing means 14 where further image and data processing is carried out by corresponding software. In particular, the image and data processing in the processing means 14 comprises the following functions: identification and classification of possible objects surrounding the motor vehicle, such as pedestrians, other vehicles, bicyclists or large animals; tracking over time the position of identified object candidates in the recorded images; estimation of a collision probability between the vehicle and a detected object; and/or activation or control of at least one driver assistance means 18 depending on the result of said collision probability estimation. The driver assistance means 18 may in particular comprise a display means for displaying information relating to a detected object. However, the invention is not limited to a display means. The driver assistance means 18 may in addition or alternatively comprise a warning means adapted to provide a collision warning to the driver by suitable optical, acoustical and/or haptical warning signals; one or more restraint systems such as occupant airbags or safety belt tensioners, pedestrian airbags, hood lifters and the like; and/or dynamic vehicle control systems such as brakes or steering means. The processing means 14 expediently has access to a memory means 25.

The electronic processing means 14 is preferably programmed or programmable and expediently comprises a microprocessor or micro-controller. The electronic processing means 14 can preferably be realized in a digital signal processor (DSP). The electronic processing means 14 and the memory means 25 are preferably realised in an on-board electronic control unit (ECU) and may be connected to the imaging means 11 via a separate cable or a vehicle data bus. In other embodiments the ECU and one or more of the imaging devices 12 can be integrated into a single unit, where a one box solution including the ECU and all imaging devices 12 can be preferred. All steps from imaging, image processing to activation or control of driver assistance means 18 are performed automatically and continuously during driving in real time.

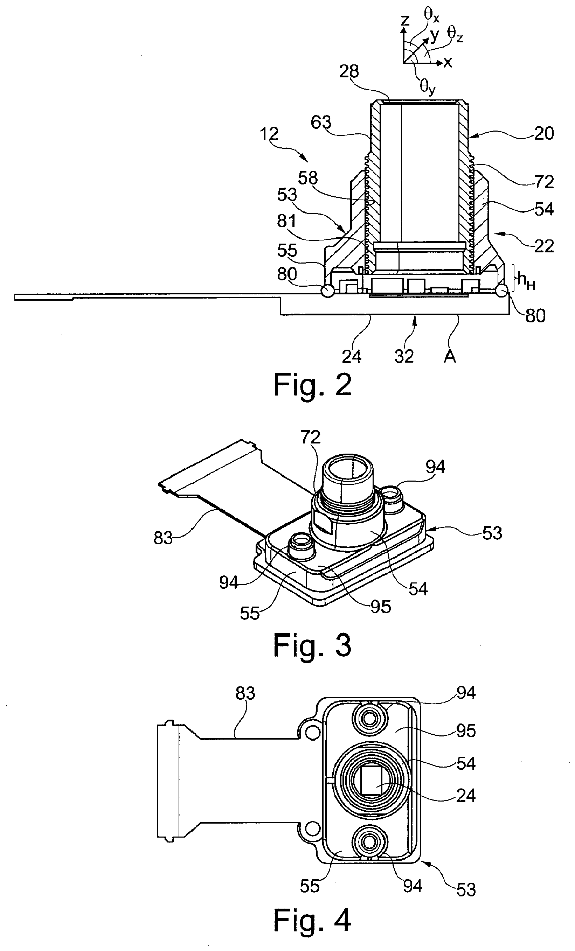

In a preferred embodiment shown in Figures 2 to 4 the camera module 12 comprises a lens objective 20, a lens holder 53 holding the lens objective 20, an image sensor 24 and a back plate 32 holding the image sensor 24. The lens holder 53 is connected to the back plate 32 by means of a glue joint 80 which may be overall ring-shaped, or for example be composed of a plurality of glue dots. The glue 80 preferably is a UV light curable glue. The lens holder 53, the back plate 32 and the glue joint 80 form a housing 22 which, together with the lens objective 20, is basically closed in a light tight manner except for an incident light opening 28. With respect to thermal stability, the lens holder 53 is preferably made of metal, for example Zinc or Zink alloy.

The lens holder 53 comprises a tubular part 54 which is preferably cylindrical and extends parallel to the optical axis of the lens objective 20, and a base part 55 to connect the lens holder 53 to the back plate 32 by the glue joint 80. The tubular part 54 of the lens holder 53 and the lens objective 20 are arranged concentrically to the optical axis of the lens objective 20. The lens objective 20 is coaxially held in the tubular part 54 of the lens holder 53 and connected to it via a screw connection. More specifically, the lens holder 53 comprises an inner thread 58 and the lens objective 20 comprises a corresponding outer thread 72 adapted to engage the thread 58 of the lens holder 53. The lens objective 20 can therefore be screwed into the lens holder 53. The connection between the lens objective 20 and the lens holder 54 is fixed by glue 81 preferably applied between the threads 58, 72.

Incident light from an object surrounding the motor vehicle falls through the opening 28 and is focussed by the lens objective 20 in the image plane A of the lens objective 20. The sensitive plane of the image sensor 24 is advantageously disposed at or in the image plane of the lens objective 20. The image sensor 24 is preferably a two-dimensional image sensor, in particular an optical sensor having maximum sensitivity in the visible wavelength region, and is adapted to convert incident light into an electrical signal containing image information of the object to be detected. The image sensor 24 may for example be a CCD sensor or a CMOS sensor. The rigid back plate 32 is preferably made of metal, in particular steel.

The printed circuit board 83 of the invention is preferably a flexible printed circuit board arranged on the sensor side of the back plate 32. The lens objective 20 comprises a lens barrel 63 and one or more lenses held inside the lens barrel 63. The lens barrel 63 is preferably made of metal, in particular brass. The outer shape of the lens barrel 63 or the lens objective 20 is generally cylindrical and closely fits the inner cylindrical shape of the tubular part 54 or the lens holder 53 such that the lens objective 20 is closely guided in the lens holder 53.

The position of the lens holder 53 is adjusted relative to the position of the back plate 32 along six degrees of freedom, namely in x-y-direction perpendicular to the optical z-axis for bore sight correction, with respect to the tip-tilt angles Θₓ, Θ_{y} adjustment, along the optical z-axis with respect to focus adjustment, and, in particular, with respect to the roll angle Θ_{z}. Due to the glue 80 connection being arranged between the lens holder 53 and the back plate 32, the camera module 12 is inherently roll-aligned, i.e. aligned with respect to the roll angle Θ_{z}. During an active alignment performed in the mounting of the camera module 12, it is possible, within certain tolerances, to reference the bore sight of each camera module 12 to its contact surface 95.

The lens holder 53 comprises rotation locking means 94 provided on the lens holder 53, preferably on an upper surface 95 of the base part 55. The rotation locking means 94 have the form of hollow pins. Preferably each camera module 12 comprises two pins 94 arranged in opposite octants defined by the optical axis of the camera module 12. This means that the angle defined by the two pins 94 and the optical axis is at least 135°, preferably 180° as seen in Figures 3 and 4.

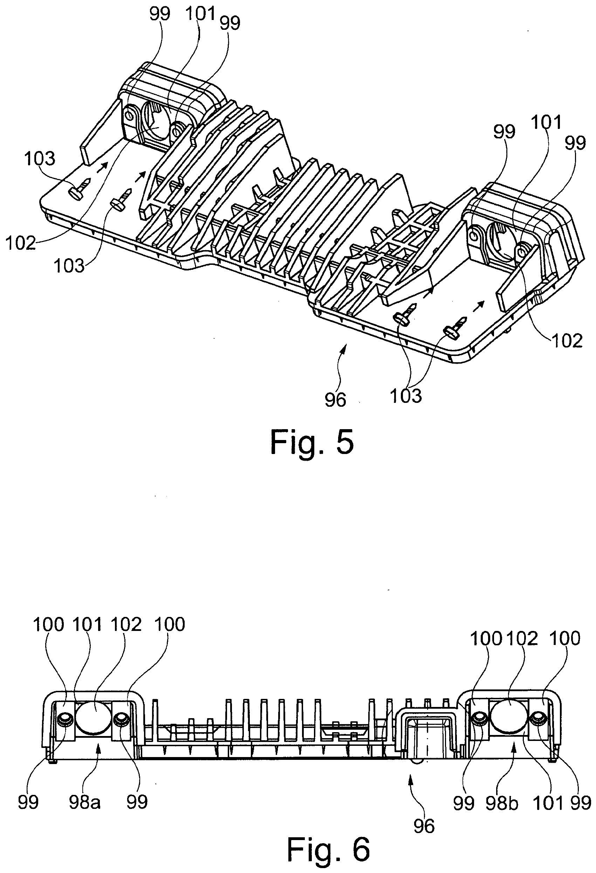

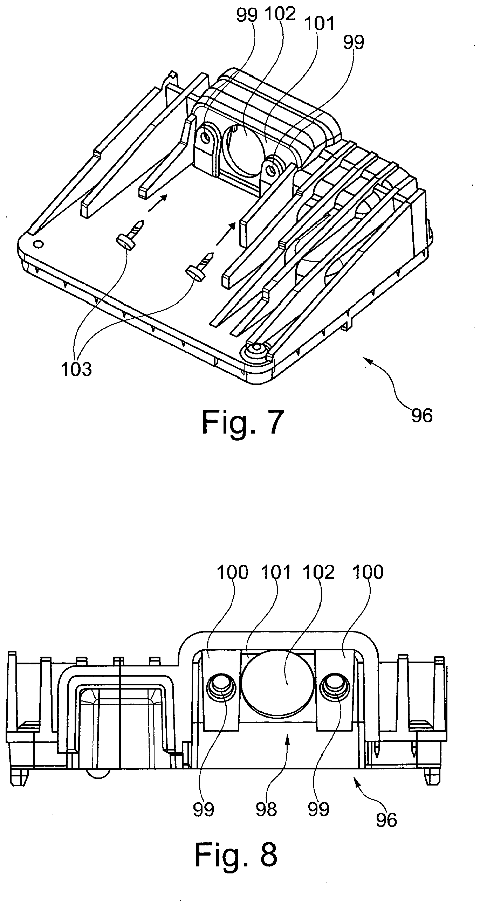

Each receptacle 98 of the camera housing part 96 comprises a mounting wall 101. In each mounting wall 101 bores 99 are formed which are adapted to fittingly receive a pin 94 of a camera module 12 to be inserted into the receptacle 98. The bores 99 are preferably through-holes through which screws 103 can be screwed from the front side of the wall 101, which will be explained later. One of each bores 99 of a receptacle 98 may be oblong along a line connecting the two bores 99 of a receptacle 98 in order to compensate for manufacturing tolerances. In Figures 6 and 8 the left bores 99 of each receptacle 98 are slightly oblong in such manner. Alternative to the design shown in the Figures, pins 94 may be provided at the camera housing part 96 and bores 99 may be provided at the camera module 12.

In each mounting wall 101, preferably an opening 102 is formed through which light can pass on its way to the image sensor 24. In the mounted state, the base part 55 of camera module 20 with the back plate 32 and the image sensor 24 is arranged on the rear side or mounting side of the mounting wall 101 in the receptacle 98, while the lens objective 20 and/or the tubular part 54 of the lens holder 53 may extend through the opening 102 to the front side.

Each mounting wall 101 also preferably comprises at least one contact surface 100 designed to provide an abutment for a surface 95 of the camera module 12, such that the surface 95 of the camera module 12 and the counter-surface 100 of the receptacle 98 are in planar contact when the camera module 12 is fully received in the receptacle 98. In the embodiment shown in Figures 6 and 8 each receptacle 98 comprises two contact surfaces 100 on opposite sides of the opening 102, where in every surface 100 one bore 99 is formed. Alternatively, for example, each receptacle 98 may comprise only one preferably ring shaped contact surface 100 surrounding the opening 102.

The surfaces 100 are preferably highly planar, which may be achieved by using machined surfaces 100 if the camera housing part 96 is cast metal, i.e. providing an additional machining step in the manufacturing of the camera housing part 96. Advantageously all contact surfaces 100 of a camera housing part 96 lie in the same plane, for example all four contact surfaces 100 of the stereo camera housing part 96 shown in Figure 6.

For mounting a camera module 12 to the camera housing part 96, the camera module 12 is inserted into the receptacle 98 and the pins 94 of the camera module 12 are simply plugged into the bores 99 of the camera housing part 96 along the pin's 94 axis from the mounting side of the wall 101. When the pins 94 of a camera module 12 are fully inserted into the bores 99 of a receptacle 98, a rotation of the camera module 12 relative to the camera housing part 96 around the optical axis, i.e. a change of the roll angle Θ_{z} of the camera module 12, is prevented. Finally, the camera module 12 is fixed to the camera housing part 96 by means of screws 103 which are screwed into the hollow pins 94 through the bores 99 from the non-mounting side of the wall 101. The screws 103 are preferably self-tapping and the bores 99 are adapted to the size of the screws to allow self-tapping.

As described above, the pins 94 and bores 99 function to fasten the camera module 12 with fixed roll orientation to the camera housing part 96. This corresponds to a most simple passive roll alignment, without necessity for any further alignment measure, which is possible since the roll angle Θ_{z} is inherently fixed in the camera module 12 as described above.

Furthermore, precise locking of the tip and tilt angles Θₓ, Θ_{y}, and also fixing of the z-alignment, of the camera module 12 relative to the camera housing part 96 in the mounted state is achieved by the highly planar contact between the contact surfaces 95, 100.

Embodiments of the invention can be described with reference to the following numbered clauses, with preferred features laid out in the dependent clauses:
1. An imaging system (11) for a motor vehicle, comprising a camera housing part (96) and at least one camera module (12) to be mounted to said camera housing part (96), characterized in that said camera module (12) comprises first rotation locking means (94), said camera housing part (96) comprises second rotation locking means (99) adapted to cooperate with said first rotation locking means (94), wherein said first and second rotation locking means (94) cooperate to lock the camera module (12) against rotation relative to the camera housing part (96).
2. The imaging system (11) as claimed in clause 1, wherein said first and second rotation locking means (94, 99) are designed to be fittingly inserted into each other along a linear insertion direction.
3. The imaging system (11) as claimed in any one of the preceding clauses, wherein said rotation locking means (94) comprises bores (99) and pins (94) to be fittingly inserted into said bores (99).
4. The imaging system (11) as claimed in clause 3, wherein said pins (94) are hollow to allow engagement of screws (103) for fixing said camera module (12) to said camera housing part (96).
5. The imaging system (11) as claimed in clause 4, wherein said bores (99) are through holes in a mounting wall (101) to allow said screws (103) to extend through said bores (99).
6. The imaging system (11) as claimed in clause 5, wherein said mounting wall (101) comprises an opening (102) through which light can pass on its way into the camera module (12).
7. The imaging system (11) as claimed in any one of the preceding clauses, wherein said camera housing part (96) comprises at least one contact surface (100) designed to be in planar contact with a surface (95) of the camera module (12) when the camera module (12) is fully inserted in said camera housing part (96).
8. The imaging system (11) as claimed in any one of the preceding clauses, wherein each camera module (12) comprises a plurality of first rotation locking means (94) to cooperate with a corresponding plurality of second rotation locking means (99) provided at the camera housing part (96).
9. The imaging system (11) as claimed in any one of the preceding clauses, wherein said plurality of first locking elements (94) is arranged in opposite octants defined by a geometrical axis of the camera module (12).
10. The imaging system (11) as claimed in any one of the preceding clauses, wherein said camera module (12) comprises a lens objective (20), a lens holder (53) holding said lens objective (20), an image sensor (24) and a back plate (32) connected to said lens holder (53) and holding said image sensor (24) in or close to an image plane (A) of the lens objective (20), characterized in that said first rotation locking means (94) is provided at said lens holder (53).
11. The camera module (12) as claimed in clause 10, characterized in that the lens holder (53) is made of metal.
12. The imaging system as claimed in clause 10 or 11, wherein the alignment of the lens holder (53) relative to the back plate (32) is fixed by a glue joint (80) between the lens holder (53) and the back plate (32).
13. A method of mounting an imaging system (11) for a motor vehicle camera module (12) comprising a camera housing part (96) and at least one camera module (12) to be mounted to said camera housing part (96), characterized
   by inserting said camera module (12) into a reception (98) of said camera, bringing first rotation locking means (94) provided at said camera module (12) into cooperation with second rotation locking means (99) provided at said camera housing part (96), and fixing said camera module (12) to said camera housing part (96).

## Claims

1. An imaging system (11) for a motor vehicle, comprising a camera housing part (96) and at least one camera module (12) to be mounted to said camera housing part (96), wherein said camera module (12) comprises first rotation locking means (94), said camera housing part (96) comprises second rotation locking means (99) adapted to cooperate with said first rotation locking means (94), wherein the camera module is inserted into a receptacle (98) of the camera housing part (96) to cause the first and second rotation locking means (94) to cooperate to lock the camera module (12) against rotation relative to the camera housing part (96) and wherein said camera housing part (96) comprises at least one contact surface (100) designed to be in planar contact with a surface (95) of the camera module (12) when the camera module (12) is fully inserted in said camera housing part (96) and wherein in the mounted state precise locking of the tip and tilt angles Θₓ, Θ_{y}, and also fixing of a z-alignment, of the camera module (12) relative to the camera housing part (96) in the mounted state is achieved by the highly planar contact between the contact surfaces (95, 100).

2. The imaging system (11) as claimed in claim 1, wherein said first and second rotation locking means (94, 99) are designed to be fittingly inserted into each other along a linear insertion direction.

3. The imaging system (11) as claimed in any one of the preceding claims, wherein said rotation locking means (94) comprises bores (99) and pins (94) to be fittingly inserted into said bores (99).

4. The imaging system (11) as claimed in claim 3, wherein said pins (94) are hollow to allow engagement of screws (103) for fixing said camera module (12) to said camera housing part (96).

5. The imaging system (11) as claimed in claim 4, wherein said bores (99) are through holes in a mounting wall (101) to allow said screws (103) to extend through said bores (99).

6. The imaging system (11) as claimed in claim 5, wherein said mounting wall (101) comprises an opening (102) through which light can pass on its way into the camera module (12).

7. The imaging system (11) as claimed in any one of the preceding claims, wherein each camera module (12) comprises a plurality of first rotation locking means (94) to cooperate with a corresponding plurality of second rotation locking means (99) provided at the camera housing part (96).

8. The imaging system (11) as claimed in any one of the preceding claims, wherein said plurality of first locking elements (94) is arranged in opposite octants defined by a geometrical axis of the camera module (12).

9. The imaging system (11) as claimed in any one of the preceding claims, wherein said camera module (12) comprises a lens objective (20), a lens holder (53) holding said lens objective (20), an image sensor (24) and a back plate (32) connected to said lens holder (53) and holding said image sensor (24) in or close to an image plane (A) of the lens objective (20), **characterized in that** said first rotation locking means (94) is provided at said lens holder (53).

10. The camera module (12) as claimed in claim 9, **characterized in that** the lens holder (53) is made of metal.

11. The imaging system as claimed in claim 9 or 10, wherein the alignment of the lens holder (53) relative to the back plate (32) is fixed by a glue joint (80) between the lens holder (53) and the back plate (32).

12. A method of mounting an imaging system (11) for a motor vehicle camera module (12) comprising a camera housing part (96) and at least one camera module (12) to be mounted to said camera housing part (96), **characterized by** inserting said camera module (12) into a reception (98) of said camera, bringing first rotation locking means (94) provided at said camera module (12) into cooperation with second rotation locking means (99) provided at said camera housing part (96), and fixing said camera module (12) to said camera housing part (96) wherein said camera housing part (96) comprises at least one contact surface (100) designed to be in planar contact with a surface (95) of the camera module (12) when the camera module (12) is fully inserted in said camera housing part (96) and wherein in the mounted state precise locking of the tip and tilt angles Θₓ, Θ_{y}, and also fixing of the z-alignment, of the camera module (12) relative to the camera housing part (96) in the mounted state is achieved by the highly planar contact between the contact surfaces (95, 100).
